# FASCICULE DE BREVET EUROPEEN

(11) **EP 2 322 386 B1**
(45) Date de publication et mention de la délivrance du brevet: **07.01.2015**
(21) Numéro de dépôt: 10306231.1
(22) Date de dépôt: 09.11.2010
(51) Int. Cl.: B60R 19/12, B62D 25/08

(54) **Ensemble avant de véhicule automobile comprenant un bouclier pare-chocs avant portant des moyens de fixation d'au moins un équipement auxiliaire du véhicule automobile**
Vorderwagenstruktur für ein Kraftfahrzeug mit einem vorderen Stossfänger mit Befestigungseinrichtungen zumindest einer zusätzlichen Ausrüstung des Kraftfahrzeugs
Front end assembly of a motor vehicle comprising a front end bumper with fixing means of at least one auxiliary equipment of the motor vehicle

(30) Priorité: 12.11.2009 FR 0957972
(43) Date de publication de la demande: 18.05.2011
(73) Titulaire: Faurecia Bloc Avant, 92000 Nanterre (FR)
(72) Inventeur: Gonin, Vincent, 37540, SAINT CYR SUR LOIRE (FR)
(74) Mandataire: Blot, Philippe Robert Emile

(56) Documents cités:
- EP-A1- 1 600 360
- EP-A1- 1 754 650
- EP-A1- 2 233 368
- EP-A2- 1 072 476
- WO-A1-01/00478
- FR-A1- 2 481 218
- FR-A1- 2 668 436
- FR-A1- 2 932 766
- US-A1- 2008 217 961

## Description

La présente invention concerne un ensemble avant de véhicule automobile, de type comprenant au moins deux paires de longerons avant d'un châssis d'un véhicule automobile et des platines d'appui et de fixation disposées aux extrémités avant des longerons.

Les véhicules automobiles modernes sont conçus pour répondre de façon convenable à différents types de chocs frontaux possibles, tel que les chocs à petite vitesse ou « chocs parking », pour une vitesse comprise entre 2,5 et 4 km/h (ECE42), les chocs à moyenne vitesse ou « chocs réparablilité », pour une vitesse d'environ 16 km/h (Danner) et les chocs à grandes vitesse, pour une vitesse comprise entre 56 et 65 km/h.

Les véhicules automobiles modernes sont également conçus pour protéger les piétons en cas de choc piéton, et en particulier pour protéger les jambes et la hanche du piéton.

US 2008/217961 A1 divulgue un ensemble selon le préambule de la revendication 1. EP 2 233 368 A1 divulgue un état de la technique selon l'Art. 54(3) CBB avec une poutre double.

Il est possible de prévoir un ensemble avant comprenant une poutre pare-chocs supérieure métallique fixée aux extrémités de longerons supérieurs avant d'une voie haute (brancards principaux) par l'intermédiaire de premiers absorbeurs de chocs métalliques rapportés sur la poutre pare-chocs supérieure, et une poutre pare-chocs inférieure fixée aux extrémités de longerons inférieurs avant d'une voie basse (prolonges de berceau) par l'intermédiaire de second absorbeurs de chocs métalliques ou en matière plastique, rapportés sur la poutre pare-chocs inférieure.

Néanmoins, un tel ensemble avant est compliqué et coûteux à fabriquer et à installer.

En outre, un tel ensemble ne s'intègre pas de façon optimale avec le reste des équipements de la partie avant du véhicule automobile, c'est-à-dire que ces équipements, tels que le système de refroidissement, les optiques ou autres sont disposés autour de l'ensemble avant sans liaison particulière entre cet ensemble et ces équipements. Des moyens de fixation complexes doivent alors être ajoutés pour liés ces différents éléments entre eux.

Un but de l'invention est de proposer un ensemble avant permettant de répondre de manière convenable aux chocs piétons et aux chocs à petite et moyenne vitesse et permettant une intégration facile des autres équipements de l'avant du véhicule, tout en étant simple et en présentant un coût de fabrication faible.

A cet effet, l'invention concerne un ensemble avant du type précité comprenant :
- un bouclier pare-chocs avant comprenant un cadre monobloc en matière plastique formé d'une poutre pare-chocs supérieure et d'une poutre pare-chocs inférieure et de deux montants reliant les poutres pare-chocs supérieure et inférieure, les montants du cadre étant configurés pour faire office d'absorbeurs de chocs et fixés en appui directement contre les platines, le bouclier comprenant en outre une poutre additionnelle venue de matière avec le cadre, ladite poutre additionnelle comprenant des moyens de fixation d'au moins un équipement auxiliaire du véhicule automobile.

Selon d'autres modes de réalisation, l'ensemble avant comprend une ou plusieurs des caractéristiques suivantes, prise(s) isolément ou selon toutes les combinaisons techniquement possibles :
- la poutre additionnelle s'étend au-dessus de la poutre supérieure et comprend au moins deux branches s'étendant sensiblement perpendiculairement au cadre vers l'arrière de celui-ci, lesdites branches comprenant des moyens de fixation d'un équipement auxiliaire du véhicule automobile ;
- la poutre additionnelle présente des nervures s'étendant au moins sur la face avant de ladite poutre ;
- la poutre additionnelle présente en outre des nervures sur sa face supérieure, lesdites nervures s'étendant en outre sur les branches ;
- la poutre inférieure comprend des moyens de fixation d'au moins un équipement auxiliaire du véhicule automobile ;
- les montants présentent une structure alvéolaire formée d'alvéoles s'étendant longitudinalement au travers des montants et débouchant sur la face arrière et/ou avant du bouclier ;
- chaque montant comprend des premières alvéoles borgnes, fermées du côté de la face arrière et ouvertes du côté de la face avant, et des deuxième alvéoles borgnes ouvertes du côté de la face arrière et fermée du côté de la face avant ;
- la poutre pare-chocs supérieure est double et comprend deux traverses espacées verticalement ;
- l'ensemble comprend en outre un équipement auxiliaire s'étendant en regard de la face arrière du bouclier, ledit équipement étant fixé au moins à la poutre additionnelle dudit bouclier par les moyens de fixation de ladite poutre additionnelle ;
- l'équipement auxiliaire est fixé à la poutre additionnelle par au moins un élément de liaison fixé aux moyens de fixation de la poutre additionnelle, ledit élément de liaison étant agencé pour absorber les vibrations entre l'équipement auxiliaire et le bouclier.

L'invention concerne également un bouclier pare-chocs avant pour véhicule automobile du type comprenant un cadre monobloc formé d'une poutre pare-chocs supérieure et d'une poutre pare-chocs inférieure et de deux montants reliant les poutres pare-chocs supérieure et inférieure et d'une poutre additionnelle venue de matière avec le cadre, ladite poutre additionnelle comprenant des moyens de fixation d'au moins un équipement auxiliaire du véhicule automobile, le bouclier étant prévu pour être intégré dans un ensemble avant de véhicule automobile tel que décrit ci-dessus, les montants du bouclier étant configurés pour faire office d'absorbeurs de chocs et adaptés pour être fixés en appui directement contre les platines.

L'invention et ses avantages seront mieux compris à la lecture de la description qui va suivre, donnée uniquement à titre d'exemple, et faite en référence aux dessins annexés, sur lesquels :
- la figure 1 est une vue schématique en perspective éclatée d'un ensemble avant selon l'invention ;
- la figure 2 est une vue en coupe de côté de l'ensemble de la figure 1 ;
- la figure 3 est une vue schématique en perspective d'un bouclier d'un ensemble avant selon un deuxième mode de réalisation de l'invention, et
- la figure 4 est une vue en perspective de trois-quarts arrière d'un ensemble avant des figures 1 et 2, un équipement auxiliaire étant fixé au bouclier dudit ensemble.

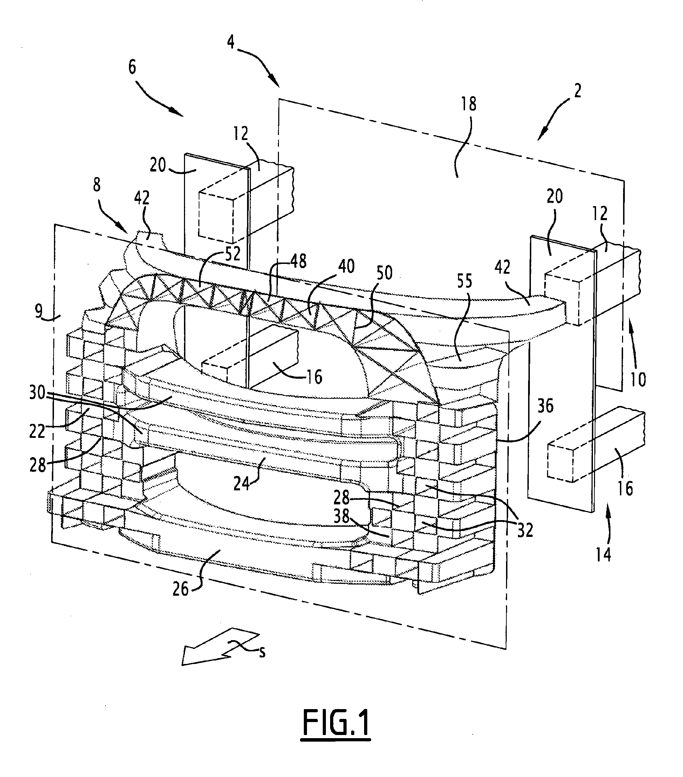

Par la suite, les termes d'orientation, tels que « longitudinal », « transversal », « avant », « arrière », « au-dessus », « en dessous », etc. s'entendent par référence à l'orientation usuelle des véhicules automobiles, illustrée sur la figure 1 par la flèches S dirigée horizontalement vers l'avant suivant une direction longitudinale du véhicule automobile.

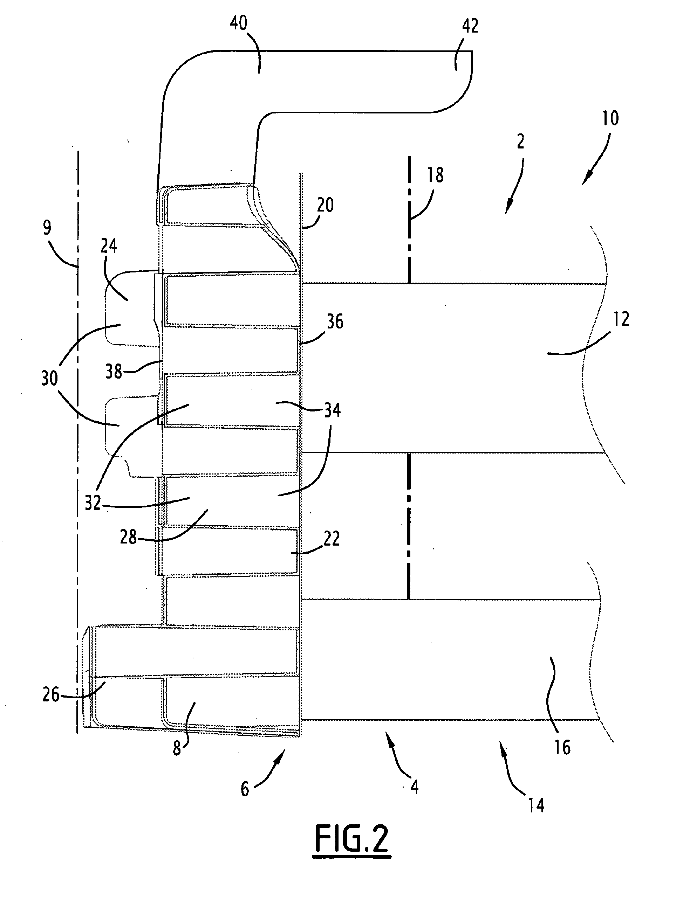

Tel que représenté sur les figures 1 et 2, un véhicule automobile 2 comprend un châssis 4 comprenant une partie avant 6, un bouclier 8 pare-chocs avant disposé à l'extrémité avant de la partie avant 6 pour protéger la partie avant 6 en cas de choc, et une peau 9 de pare-chocs pour recouvrir le bouclier 8.

La partie avant 6 comprend une voie haute 10 comprenant une paire de longerons supérieurs 12, ou brancards, et une voie basse 14 comprenant une paire de longerons inférieurs 16, ou prolonges de berceau.

Les longerons supérieurs 12 s'étendent longitudinalement et sont espacés transversalement l'un de l'autre.

Les longerons inférieurs 16 s'étendent longitudinalement et sont espacés transversalement l'un de l'autre. L'écartement transversal entre les longerons inférieurs 16 est sensiblement égal à celui entre les longerons supérieurs 12.

Les longerons supérieurs 12 sont tarés pour encaisser une force axiale maximale sans flambement comprise entre 80kN et 100kN. Les longerons inférieurs 16 sont tarés pour encaisser une force axiale maximale sans flambement comprise entre 25kN et 45kN. Sur certains véhicules aux gabarits éloignés de la moyenne, les fourchettes de tarage proposées peuvent différer légèrement, sans sortir du cadre de l'invention.

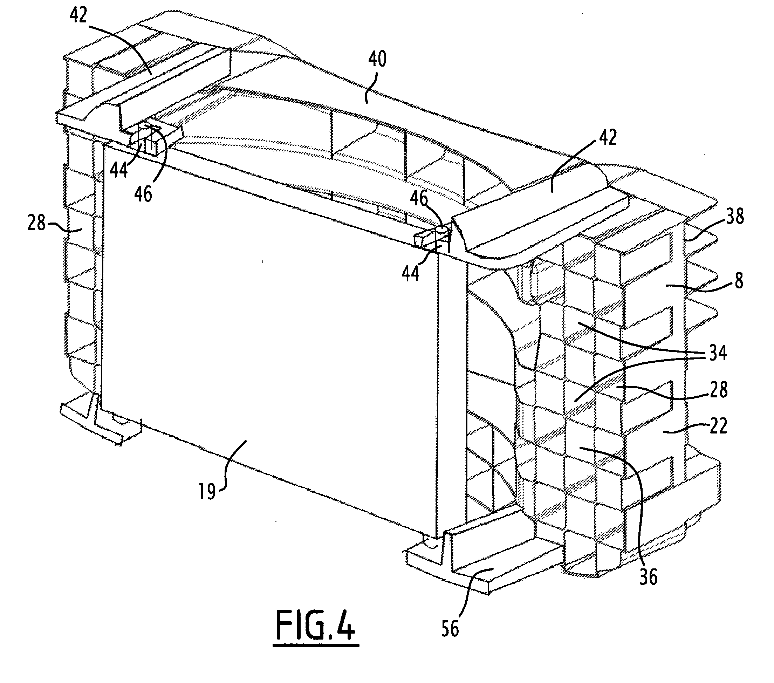

Les longerons supérieurs 12 sont prévus pour recevoir entre eux et supporter au moins en partie une face avant 18. La face avant 18 est représentée sur la figure 1 de façon schématique par un rectangle en traits mixte. De manière connue, la face avant 18 comprend un cadre de support portant des organes fonctionnels d'un système de refroidissement du groupe motopropulseur du véhicule et/ou d'un système de climatisation, tel qu'un ou plusieurs radiateur ou un groupe motoventilateur. Comme représenté sur la figure 4 et comme cela sera décrit ultérieurement, le système de refroidissement comprend un radiateur 19 fixé au bouclier 8.

La face avant 18 se situe en retrait vers l'arrière des extrémités avant des longerons supérieur 12 et inférieurs 16.

La partie avant 6 comprend un paire de platines 20 de fixation disposées aux extrémités avant des longerons supérieurs 12 et inférieurs 16. Chaque platine 20 relie l'extrémité avant d'un longerons supérieur 12 à celle du longeron inférieur 16 adjacent situé du même côté. Chaque platine 20 présente la forme d'une plaque métallique s'étendant dans un plan transversal sensiblement vertical. Les platines 20 peuvent être réalisées en acier embouti, roulé, plié, ou encore en alliage léger.

La peau 9 est un élément de carrosserie avant du véhicule et définissant le galbe extérieur du véhicule.

Le bouclier 8 est disposé entre la peau 9, par laquelle il est recouvert, et la partie avant 6. Il a pour fonction d'absorber l'énergie de chocs à petite vitesse et de chocs à moyenne vitesse (Danner) de façon à préserver le châssis 4, et de protéger un piéton en cas de choc piéton.

Le bouclier 8 est disposé aux extrémités avant des longerons supérieurs 12 et inférieurs 16 en étant fixé en appui longitudinal contre les platines 20. Le bouclier 8 est disposé devant la face avant 18 de façon à la protéger, ainsi que les organes fonctionnels qu'elle porte.

Le bouclier 8 comprend un cadre 22 monobloc formé d'une poutre pare-chocs supérieure 24 située à hauteur de la voie haute 10, d'une poutre pare-chocs inférieure 26 située à hauteur de la voie basse 12 et de deux montants 28 reliant les poutres pare-chocs 24, 26 entre elles.

Les poutres pare-chocs 24, 26 s'étendent sensiblement transversalement et horizontalement. Elles sont espacées verticalement l'une de l'autre. Les montants 28 s'étendent sensiblement verticalement entre les poutres pare-chocs 24, 26.

Les poutres pare-chocs 24, 26 ont pour fonction de canaliser l'énergie d'un choc vers les montants 28 en cas de collision. La poutre pare-chocs inférieure 26, ou « poutre pare-chocs piéton », a également pour fonction de protéger la jambe de piéton en cas de choc piéton.

La poutre pare-chocs inférieure 26 est disposée pour venir impacter la jambe d'un piéton en dessous du genou, tandis que la poutre pare-chocs supérieure 26 est prévue pour venir impacter la jambe d'un piéton sensiblement au droit du genou.

L'amplitude verticale de la poutre pare-chocs supérieure 24 est comprise entre 100 mm et 200 mm, de préférence entre 120mm et 150mm, ce qui représente une augmentation de 30% à 80% par rapport à l'amplitude verticale des poutres pare-chocs supérieures métalliques classiques, de hauteur classiquement comprise entre 70mm et 90mm. Il en résulte une meilleure compatibilité avec le genou du piéton (cisaillement réduit), du fait de la moindre sensibilité à une dispersion de l'organisme du piéton (taille du tibia) ou à l'assiette du véhicule (degré de chargement, assiette de freinage). L'avantage est identique en configuration de choc parking ou de choc compatibilité basse vitesse. Avantageusement, la poutre pare-chocs inférieure 26 est plus rigide et avancée par rapport à la poutre pare-chocs supérieure 24 pour assurer une protection convenable au piéton.

Dans cet exemple, la poutre pare-chocs supérieure 24 est double et comprend au moins deux membrures 30 horizontales parallèles espacées verticalement. Chaque membrure 30 possède une section en U ouverte horizontalement vers l'arrière. Les membrures 30 augmentent l'inertie de la poutre pare-chocs supérieure 24 en flexion et en torsion. Elles peuvent présenter des dépouilles et surtout une hauteur suffisante de manière à ce que l'injection et le démoulage du cadre soient facilités (classiquement, hauteur comprise entre 30mm et 40mm). En variante, la poutre pare-chocs supérieure 24 comprend une membrure unique.

En option, chaque membrure 30 comprend des nervures verticales longitudinales intérieures de rigidification (non représentées) pour conférer à la membrure 30 la rigidité souhaitée. Dans une variante avantageuse, les nervures présentes dans les membrures 30 sont réparties sur la largeur de ces membrures, pour que la densité de nervures par unité de longueur en se déplaçant le long d'un axe transversal du véhicule soit supérieure dans une région centrale de la membrure 30 par rapport à la densité dans les régions latérales de la membrure 30 situées de part et d'autre de la région centrale.

Ainsi, la région centrale s'étend par exemple de part et d'autre du centre de la membrure 30 sur une étendue latérale d'environ 200 mm. Cette région centrale présente par exemple un nombre de nervures supérieures à 4.

La présence d'un nombre élevé de nervures dans cette région centrale permet, en choc piéton centré, après impact de la jambe du piéton sur cette région centrale, une réduction de la décélération par flexion pure des membrures 30 sur une course longitudinale comprise entre 50 mm et 70 mm. Cette réponse est radicalement différente de la réponse d'un absorbeur classique en mousse qui travaille en compression pure sur une course comparable.

Chaque région latérale s'étend entre la région centrale et les montants 28 à une distance comprise par exemple entre 200 mm et 300 mm du centre de la membrure 30. Le nombre de nervures dans chaque région périphérique est inférieur à 4. Ainsi, en choc piéton médian, lorsque la jambe du piéton impacte cette région latérale, la réduction de la décélération se fait par une combinaison de flexion et de compression localisée de cette région sur une course proche de 50 mm.

La poutre pare-chocs inférieure 26 possède une section en U ouverte horizontalement vers l'arrière. La poutre pare-chocs inférieure 26 présente une hauteur supérieure à celle de chacune des membrures 30 de la poutre pare-chocs supérieure 24.

En option, la poutre pare-chocs inférieure 26 comprend des nervures intérieures de rigidification (non représentées) pour conférer à la poutre pare-choc inférieure 26 la rigidité souhaitée comme décrit plus haut.

Les montants 28 du bouclier 8 sont prévus pour faire office d'absorbeur d'énergie entre la peau 9 et les platines 20, et pour absorber l'énergie d'un choc sur le bouclier 8 à petite vitesse ou à moyenne vitesse (Danner).

Ainsi, les montants 28 sont aptes à être fixés directement en appui rigide contre les platines 20, sans interposer des absorbeurs de choc additionnels rapportés entre les montants 28 et les platines 20.

Pour un véhicule automobile dont la masse est comprise entre 800 et 1200 kg, l'énergie à dissiper en cas de choc moyenne vitesse (Danner) est généralement comprise entre 6 et 12 kJ, avantageusement entre 7kJ et 10kJ. De préférence, chaque montant 28 est prévu pour absorber une énergie supérieure à 5 kJ en cas de choc moyenne vitesse (Danner), de préférence comprise entre 6 et 10kJ.

Chaque montant 28 présente une structure alvéolaire comprenant des alvéoles 32, 34 s'étendant longitudinalement entre une face arrière 36 et une face avant 38 des montants 28.

Chaque montant 28 comprend des alvéoles borgnes inversées comprenant des premières alvéoles 32 borgnes, fermées du côté de la face arrière 36 et ouvertes du côté de la face avant 38, et des deuxièmes alvéoles 34 borgnes ouvertes du côté de la face arrière 36 et fermées du côté de la face avant 28. Les premières alvéoles 32 et les deuxièmes alvéoles 34 sont disposées en quinconce (ou damier).

Le bouclier 8 comprend en outre une poutre additionnelle 40 venue de matière avec le cadre 22 et s'étendant au-dessus de la poutre supérieure 24 sensiblement parallèlement à celle-ci. La poutre additionnelle 40 comprend des moyens de fixation d'au moins un équipement auxiliaire du véhicule automobile. Selon le mode de réalisation représenté sur les figures, ces moyens de fixation sont prévus sur une branche 42 s'étendant à chacune des extrémités de la poutre additionnelle 40. Les branches 42, venues de matière avec la poutre additionnelle, s'étendent sensiblement perpendiculairement à la poutre additionnelle 40 vers l'arrière du cadre 22. Les branches 42 s'étendent donc selon une direction sensiblement longitudinale vers l'arrière du bouclier 8.

Les branches 42 comprennent des moyens de fixation 44, représentés sur la figure 4, d'un équipement auxiliaire du véhicule automobile, tel qu'un radiateur 19. Les moyens de fixation sont par exemple formés par une encoche destinée à recevoir des moyens de fixation complémentaires 46 prévus sur le radiateur 19. Les moyens de fixation complémentaires 46 sont par exemple formés par des pions prévus sur le radiateur et s'emboîtant dans une encoche respective des branches 42. Selon un autre mode de réalisation, les moyens de fixation 44 sont formés par au moins un orifice (non représenté), sur chaque branche 42, de réception d'un pion complémentaire prévu sur le radiateur 19 ou d'un pion prévu pour s'engager dans un orifice complémentaire du radiateur 19. sur les figures 1 à 3, on a pas représenté de moyens de fixation du radiateur 19 et ils peuvent être de tout type adapté à la réception de l'équipement auxiliaire du véhicule automobile.

Selon un mode de réalisation alternatif, le radiateur 19 est fixé aux branches 42 par l'intermédiaire d'au moins un élément de liaison (non représenté) agencé pour absorber les vibrations susceptibles de se propager entre le bouclier 8 et le radiateur 19. Cet élément de liaison est par exemple réalisé en un matériau élastomère présentant une certaine flexibilité tout en ayant une rigidité suffisante pour maintenir le radiateur 19 en position par rapport au bouclier 8. Un tel élément de liaison est plus particulièrement connu sous le nom de « silentbloc ». Un tel élément présente par exemple un orifice de réception d'un pion du radiateur 19 et un orifice de réception d'un pion prévu sur une branche 42 de la poutre additionnelle 40 formant moyen de fixation 44. Selon un mode de réalisation, deux éléments de liaison sont prévus, chacun fixant respectivement le radiateur 19 à une des branches 42 de la poutre additionnelle 40. Selon encore un autre mode de réalisation, la poutre additionnelle 40 ne comprend pas de branche 42 et les éléments de liaison sont fixés aux parties extrêmes de la poutre additionnelle 40.

Selon des modes de réalisation alternatifs, la poutre additionnelle 40 comprend en outre des moyens de fixation d'autres équipements auxiliaires du véhicule automobile, tels que des moyens de fixation de supports d'optique ou des moyens de fixation à des longerons d'aile prévus sur la caisse du véhicule automobile. La poutre additionnelle 40 peut également comprendre des moyens de réception de la serrure du capot du véhicule automobile.

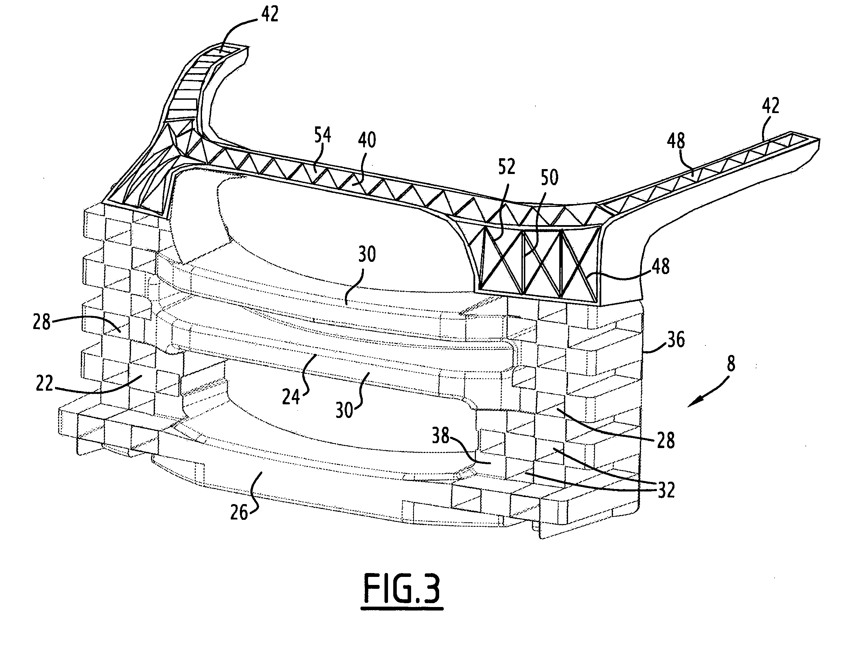

La poutre additionnelle 40 est agencée pour présenter une certaine flexion selon la direction verticale afin d'absorber de l'énergie due à un choc sur le capot du véhicule automobile. En outre, elle présente également des caractéristiques d'absorption d'énergie en cas de choc frontal contre le véhicule automobile. A cet effet, la poutre additionnelle 40 comprend des nervures 48 s'étendant au moins sur la face avant de ladite poutre 40, comme représenté sur les figures 1 et 3. Selon le mode de réalisation représenté sur la figure 3, les nervures 48 s'étendent en outre sur la face supérieure de la poutre 40 jusque sur les branches 42. Comme représenté sur la figure 1, les nervures 48 sont par exemple réparties entre des nervures verticales 50 espacées les unes des autres longitudinalement et des nervures 52 en « X » s'étendant en diagonale entre les nervures verticales 50. Selon le mode de réalisation représenté sur la figure 3, les nervures 54 de la face supérieure de la poutre additionnelle 40 s'étendent en « dents de scie ».

Selon le mode de réalisation représenté sur la figure 1, la poutre additionnelle 40 comprend en outre des alvéoles 55 prolongeant les montants 28 sur les côtés de la face avant de la poutre additionnelle 40.

Le radiateur 19 représenté sur la figure 4 est également fixé à la poutre inférieure 26, par des moyens de fixation tels que les éléments de liaison 56, ou « silentbloc », décrits ci-dessus. Selon un mode de réalisation alternatif non représenté, la poutre inférieure 26 comprend des montants portant des moyens de fixation apte à recevoir des moyens de fixation complémentaires prévus sur le radiateur 19.

Chaque montant 28 est fixé directement sur la platine 20 correspondante, en contact et en appui longitudinal rigide contre sur la platine 20. Chaque montant 28 recouvre la majeure partie de la surface d'appui offerte par la platine 20 correspondante.

Chaque montant 28 est fixé sur la platine 20 correspondante par vissage ou par collage.

Cette deuxième solution est avantageuse, dans la mesure où elle permet une bonne répartition des efforts. En effet, les contraintes de design liées à l'assemblage par vissage (insert métalliques, trous, semelles de rigidification, espaces pour les visseuses...) sont levées, tandis que les contraintes localisées et les risques d'arrachement causés par le vissage sont très fortement atténués. En outre, la géométrie choisie formée d'alvéoles borgnes inversées disposés en quinconces augmente considérablement la surface d'encollage à l'arrière des montants 28 et participe à la répartition favorable des efforts.

Les platines 20 de grande hauteur, ou platine géantes, raccordant chaque longeron supérieur 12 à un longeron inférieur 16, permet de répartir la distribution des efforts encaissés par le bouclier 8 sur une hauteur importante dans le véhicule, grâce aux montants 28 s'étendant entre les voies haute et basse.

Les platines 20 géantes offrent une surface d'appui rigide étendue aux montants 28, ce qui permet aux montants 28 de travailler uniformément en compression en cas de choc, sans flexion dans leur partie médiane située verticalement entre la vois haute 10 et la voie basse 14. Cet atout permet une conception homogène des montants 28, possédant des alvéoles analogues uniformément réparties, démoulables longitudinalement et destinées à travailler essentiellement en compression. L'architecture diffère donc radicalement des structures dépourvues de platines géantes, dont les montants doivent présenter un design destiné à un travail en flexion.

De ce fait, le véhicule muni d'un ensemble avant selon l'invention est moins intrusif lorsqu'il entre en contact avec un autre véhicule, ce qui bénéficie à la compatibilité inter-véhiculaire à basse et moyenne vitesse.

La dimension de l'appui offert par les platines 20 est avantageusement comprise entre 100 et 180 mm en largeur, et entre 350 et 450mm en hauteur, ce qui correspond à des aires globalement comprises entre 3,5 et 8 dm².

La structure alvéolaire des montants 28 facilite la fabrication et confère aux montants une capacité d'absorption d'énergie suffisante sur une profondeur (dimension suivant la direction longitudinale) faible.

Le cadre 22 est obtenu d'un seul bloc par exemple par moulage par injection de matière plastique. Il peut être démoulé suivant une unique direction correspondant à la direction longitudinale du véhicule automobile lorsque le bouclier 8 est fixé sur le châssis 4. Ainsi, le cadre 22 peut être obtenu de façon simple, avec un coût de fabrication faible. La structure alvéolaire des montants 28 permet des dépouilles faibles, voire nulles, ce qui limite le poids et le coût de fabrication du bouclier 8. Les pièces obtenues sont donc légères et présentent une économie de matière.

La structure alvéolaire des montants permet également de réduire les épaisseurs locales de parois délimitant les alvéoles 32, 34. Ainsi, cette épaisseur locale peut être réduite dans une gamme comprise entre 2,5 et 4 mm, avantageusement comprise entre 3 mm et 3,5 mm.

En outre, et d'une manière générale, le démoulage du bouclier monobloc 8 est facilité puisque les faibles dépouilles ou leur absence permet un démoulage par mouvement de deux demi-moules opposées dans des sens opposés le long d'un axe correspondant à l'axe longitudinal du véhicule. Ainsi, il n'est pas nécessaire de prévoir des tiroirs ou des parties mobiles dans le moule.

En outre, les dépouilles faibles voir nulles dans les montants 28 en damier permet d'obtenir une raideur uniforme lors d'un enfoncement longitudinal, par exemple lors d'un choc à moyenne vitesse. Ainsi, il est possible d'obtenir un palier d'effort sensiblement constant en fonction du déplacement, ce qui augmente l'énergie dissipée et diminue la course d'absorption, tout en restant sous la force de tarage des longerons 12, 16 définie plus haut.

Il en résulte que l'énergie d'un choc peut être dissipée moyennant une course réduite, et que la solution s'avère très compacte. Cette solution est donc particulièrement adaptée aux véhicules de faible cylindré présentant une course longitudinale d'absorption de choc inférieure à 250 mm, et notamment inférieure à 200 mm. Les montants 28 présentent une épaisseur longitudinale comprise entre 120 et 220 mm. Ceci permet une absorption d'énergie efficace, tout en limitant le porte-à-faux du bouclier 8 pris entre les platines 20 et l'extrémité avant du bouclier 8.

Par ailleurs, en choc piéton décalé latéralement, pour des distances situées notamment à plus de 300 mm du centre des membrures 30, la réduction de la décélération se fait de préférence par compression pure, très localisée, des montants 28 en damier sur une course d'environ 50 mm.

La poutre additionnelle 40 permet en outre d'intégrer de façon optimale le bouclier 8 avec les équipements auxiliaires l'entourant en portant des moyens de fixation de ces équipements, tout en conservant un procédé de réalisation particulièrement simple et économique.

## Revendications

1. Ensemble avant de véhicule automobile, du type comprenant au moins deux paires de longerons (12, 16) avant d'un châssis (4) d'un véhicule automobile (2) et des platines (20) d'appui et de fixation disposées aux extrémités avant des longerons (12, 16), **caractérisé en ce qu'**il comprend un bouclier (8) pare-chocs avant comprenant un cadre (22) monobloc en matière plastique formé d'une poutre pare-chocs supérieure (24) et d'une poutre pare-chocs inférieure (26) et de deux montants (28) reliant les poutres pare-chocs supérieure (24) et inférieure (26), la poutre pare-chocs supérieure (24) étant double et comprenant au moins deux membrures (30) parallèles espacées, les montants (28) du cadre (22) étant configurés pour faire office d'absorbeurs de chocs et fixés en appui directement contre les platines (20), le bouclier (8) comprenant en outre une poutre additionnelle (40) venue de matière avec le cadre (22), ladite poutre additionnelle (40) comprenant des moyens de fixation d'au moins un équipement auxiliaire du véhicule automobile.

2. Ensemble avant selon la revendication 1, **caractérisé en ce que** la poutre additionnelle (40) s'étend au-dessus de la poutre supérieure (24) et comprend au moins deux branches (42) s'étendant sensiblement perpendiculairement au cadre (22) vers l'arrière de celui-ci, lesdites branches (42) comprenant des moyens de fixation (44) d'un équipement auxiliaire du véhicule automobile.

3. Ensemble avant selon la revendication 2, **caractérisé en ce que** la poutre additionnelle (40) présente des nervures (48, 50, 52) s'étendant au moins sur la face avant de ladite poutre (40).

4. Ensemble avant selon la revendication 3, **caractérisé en ce que** la poutre additionnelle (40) présente en outre des nervures (54) sur sa face supérieure, lesdites nervures s'étendant en outre sur les branches (42).

5. Ensemble avant selon l'une quelconque des revendications 1 à 4, **caractérisé en ce que** la poutre inférieure (26) comprend des moyens de fixation d'au moins un équipement auxiliaire du véhicule automobile.

6. Ensemble avant selon l'une quelconque des revendications 1 à 5, **caractérisé en ce que** les montants (28) présentent une structure alvéolaire formée d'alvéoles s'étendant longitudinalement au travers des montants (28) et débouchant sur la face arrière et/ou avant du bouclier (8).

7. Ensemble avant selon la revendication 6, **caractérisé en ce que** chaque montant (28) comprend des premières alvéoles (32) borgnes, fermées du côté de la face arrière (36) et ouvertes du côté de la face avant (38), et des deuxième alvéoles (34) borgnes ouvertes du côté de la face arrière (36) et fermée du côté de la face avant (28).

8. Ensemble avant selon l'une quelconque des revendications 1 à 7, **caractérisé en ce que** la poutre pare-chocs supérieure (24) est double et comprend deux membrures (30) espacées verticalement.

9. Ensemble avant selon l'une quelconque des revendications 1 à 8, **caractérisé en ce qu'**il comprend en outre un équipement auxiliaire (19) s'étendant en regard de la face arrière du bouclier (8), ledit équipement étant fixé au moins à la poutre additionnelle (40) dudit bouclier (8) par les moyens de fixation de ladite poutre additionnelle (40).

10. Ensemble avant selon la revendication 9, **caractérisé en ce que** l'équipement auxiliaire est fixé à la poutre additionnelle (40) par au moins un élément de liaison fixé aux moyens de fixation de la poutre additionnelle (40), ledit élément de liaison étant agencé pour absorber les vibrations entre l'équipement auxiliaire (19) et le bouclier (8).

11. Bouclier pare-chocs avant pour véhicule automobile, du type comprenant un cadre (22) monobloc formé d'une poutre pare-chocs supérieure (24) et d'une poutre pare-chocs inférieure (26) et de deux montants (28) reliant les poutres pare-chocs supérieure (24) et inférieure (26) et d'une poutre additionnelle (40) venue de matière avec le cadre (22), ladite poutre additionnelle comprenant des moyens de fixation d'au moins un équipement auxiliaire du véhicule automobile,
la poutre pare-chocs supérieure (24) étant double et comprenant au moins deux membrures (30) parallèles espacées, les montants (28) du cadre (22) étant configurés pour faire office d'absorbeurs de chocs et fixés en appui directement contre les platines (20), le bouclier (8) comprenant en outre une poutre additionnelle (40) venue de matière avec le cadre (22), ladite poutre additionnelle (40) comprenant des moyens de fixation d'au moins un équipement auxiliaire du véhicule automobile.

## Patentansprüche

1. Kraftfahrzeug-Frontstruktur des Typs, der aufweist: mindestens zwei Paare von vorderen Längsträgern (12, 16) eines Fahrgestells (4) eines Kraftfahrzeugs (2) und Platten (20) zum Stützen und zum Befestigen, die an den vorderen Enden der Längsträger (12, 16) angeordnet sind, **dadurch gekennzeichnet, dass** sie eine vordere Stoßstangen-Abschirmung (8) aufweist, aufweisend einen Monoblockrahmen (22) aus Kunststoff, der aus einem oberen Stoßstangen-Träger (24) und einem unteren Stoßstangen-Träger (26) und aus zwei Balken (28) gebildet ist, die den oberen (24) und den unteren (26) Stoßstangen-Träger miteinander verbinden, wobei der obere Stoßstangen-Träger (24) doppelt ist und mindestens zwei parallele im Abstand vorgesehene Rippen (30) aufweist, wobei die Balken (28) des Rahmens (22) eingerichtet sind, um als Stoßdämpfer zu dienen, und direkt an den Platten (20) abgestützt befestigt sind, wobei die Abschirmung (8) ferner einen zusätzlichen Träger (40) aufweist, der aus einem Material mit dem Rahmen (22) ist, wobei der zusätzliche Träger (40) Mittel zum Befestigen mindestens einer Zusatzausrüstung des Kraftfahrzeugs aufweist.

2. Frontstruktur gemäß Anspruch 1, **dadurch gekennzeichnet, dass** der zusätzliche Träger (40) sich über dem oberen Träger (24) erstreckt und mindestens zwei Arme (42) aufweist, die sich im Wesentlichen senkrecht zu dem Rahmen (22) in Richtung zu der Rückseite desselben erstrecken, wobei die Arme (42) Mittel zum Befestigen (44) einer Zusatzausrüstung des Kraftfahrzeugs aufweisen.

3. Frontstruktur gemäß Anspruch 2, **dadurch gekennzeichnet, dass** der zusätzliche Träger (40) Verstärkungsrippen (48, 50, 52) aufweist, die sich mindestens an der Vorderseite des Trägers (40) erstrecken.

4. Frontstruktur gemäß Anspruch 3, **dadurch gekennzeichnet, dass** der zusätzliche Träger (40) ferner Verstärkungsrippen (54) an seiner Oberseite aufweist, wobei die Verstärkungsrippen sich ferner an den Armen (42) erstrecken.

5. Frontstruktur gemäß irgendeinem der Ansprüche 1 bis 4, **dadurch gekennzeichnet, dass** der untere Träger (26) Mittel zum Befestigen mindestens einer Zusatzausrüstung des Kraftfahrzeugs aufweist.

6. Frontstruktur gemäß irgendeinem der Ansprüche 1 bis 5, **dadurch gekennzeichnet, dass** die Stützen (28) eine Wabenstruktur aufweisen, die aus Waben gebildet ist, die sich in Längsrichtung über die Stützen (28) erstrecken und in die Rückseite und/oder Vorderseite der Abschirmung (8) einmünden.

7. Frontstruktur gemäß Anspruch 6, **dadurch gekennzeichnet, dass** jeder Balken (28) aufweist: erste Blindwaben (32), die auf der Seite der Rückseite (36) geschlossen und auf der Seite der Vorderseite (38) offen sind, und zweite Blindwaben (34), die auf der Seite der Rückseite (36) offen und auf der Seite der Vorderseite (28) geschlossen sind.

8. Frontstruktur gemäß irgendeinem der Ansprüche 1 bis 7, **dadurch gekennzeichnet, dass** der obere Stoßstangen-Träger (24) doppelt ist und zwei Rippen (30) aufweist, die vertikal im Abstand vorgesehen sind.

9. Frontstruktur gemäß irgendeinem der Ansprüche 1 bis 8, **dadurch gekennzeichnet, dass** sie ferner aufweist eine Zusatzausrüstung (19), die sich gegenüber der Rückseite der Abschirmung (8) erstreckt, wobei die Ausrüstung mittels der Befestigungsmittel des zusätzlichen Trägers (40) mindestens an dem zusätzlichen Träger (40) der Abschirmung (8) befestigt ist.

10. Frontstruktur gemäß Anspruch 9, **dadurch gekennzeichnet, dass** die Zusatzausrüstung an dem zusätzlichen Träger (40) mittels mindestens eines Verbindungselements befestigt ist, das an den Befestigungsmitteln des zusätzlichen Trägers (40) befestigt ist, wobei das Verbindungselement eingerichtet ist, um die Schwingungen zwischen der Zusatzausrüstung (19) und der Abschirmung (8) zu absorbieren.

11. Vordere Stoßstangenabschirmung für ein Kraftfahrzeug, des Typs der aufweist: einen Einblockrahmen (22), der aus einem oberen Stoßstangen-Träger (24) und einem unteren Stoßstangen-Träger (26) und aus zwei Balken (28), die den oberen (24) und den unteren (26) Stoßstangen-Träger miteinander verbinden, und aus einem zusätzlichen Träger (40) gebildet ist, der mit dem Rahmen (22) aus einem Material ist, wobei der zusätzliche Träger Mittel zum Befestigen mindestens einer Zusatzausrüstung des Kraftfahrzeugs aufweist, wobei der obere Stoßstangen-Träger (24) doppelt ist und mindestens zwei parallele im Abstand vorgesehene Rippen (30) aufweist, wobei die Balken (28) des Rahmens (22) eingerichtet sind, um als Stoßdämpfer zu dienen, und direkt an den Platten (20) abgestützt befestigt sind, wobei die Abschirmung (8) ferner einen zusätzlichen Träger (40) aufweist, der aus einem Material mit dem Rahmen (22) ist, wobei der zusätzliche Träger (40) Mittel zum Befestigen mindestens einer Zusatzausrüstung des Kraftfahrzeugs aufweist.

## Claims

1. A front assembly for a motor vehicle of the type comprising at least two pairs of front longitudinal members (12,16) of a chassis (4) of a motor vehicle (2) and supporting and attachment plates (20) positioned at the front ends of the longitudinal members (12, 16), **characterized in that** it comprises a front bumper shield (8) comprising a one-piece frame (22) in plastic material and formed with an upper bumper beam (24) and a lower bumper beam (26) and two uprights (28) connecting the upper (24) and lower (26) bumper beams, the upper bumper beam (24) being double and comprising at least two spaced parallel chord members (30), the uprights (28) of the frame (22) being configured in order to act as impact absorbers and attached and directly bearing against the plates (20), the shield (8) further comprising an additional beam (40) made with the frame (22) in the same material, said additional beam (40) comprising attachment means for attaching at least one piece of auxiliary equipment of the motor vehicle.

2. The front assembly according to claim 1, **characterized in that** the additional beam (40) extends above the upper beam (24) and comprises at least two branches (42) extending substantially perpendicularly to the frame (22) towards the rear of the latter, said branches (42) comprising attachment means (44) for attaching a piece of auxiliary equipment of the motor vehicle.

3. The front assembly according to claim 2, **characterized in that** the additional beam (40) has ribs (48, 50, 52) extending at least on the front face of said beam (40).

4. The front assembly according to claim 3, **characterized in that** the additional beam (40) further has ribs (54) on its upper face, said ribs further extending on the branches (42).

5. The front assembly according to any of claims 1 to 4, **characterized in that** the lower beam (26) comprises attachment means for attaching at least one piece of auxiliary equipment of the motor vehicle.

6. The front assembly according to any of claims 1 to 5, **characterized in that** the uprights (28) have a honeycomb structure formed with cells extending longitudinally through the uprights (28) and opening onto the rear and/or front face of the shield (8).

7. The front assembly according to claim 6, **characterized in that** each upright (28) comprises first blind cells (32), closed on the rear face side (36) and open on the front face side (38), and second blind cells (34) open on the rear face side (36) and closed on the front face side (38).

8. The front assembly according to any of claims 1 to 7, **characterized in that** the upper bumper beam (24) is double and comprises two vertically spaced out chord members (30).

9. The front assembly according to any of claims 1 to 8, **characterized in that** it further comprises a piece of auxiliary equipment (19) extending opposite to the rear face of the shield (8), said piece of equipment being attached to at least the additional beam (40) of said shield (8) by the attachment means of said additional beam (40).

10. The front assembly according to claim 9, **characterized in that** the piece of auxiliary equipment (19) is attached to the additional beam (40) through at least one connecting member which is attached to the attachment means of the additional beam (40), said connecting member being laid out so as to absorb vibrations between the piece of auxiliary equipment (19) and the shield (8).

11. A front bumper shield for a motor vehicle, of the type comprising a one-piece frame (22) formed with an upper bumper beam (24) and a lower bumper beam (26) and two uprights (28) connecting the upper (24) and lower (26) bumper beams and an additional beam (40) made with the frame (22) in the same material, said additional beam (40) comprising attachment means for attaching at least one piece of auxiliary equipment of the motor vehicle, the upper bumper beam (24) being double and comprising at least two spaced parallel chord members (30), the uprights (28) of the frame (22) being configured in order to act as impact absorbers and attached and directly bearing against the plates (20), the shield (8) further comprising an additional beam (40) made with the frame (22) in the same material, said additional beam (40) comprising attachment means for attaching at least one piece of auxiliary equipment of the motor vehicle.
